Europäisches Patentamt

European Patent Office

Office européen des brevets

(19)

(11) **EP 1 147 572 B1**

(12) **FASCICULE DE BREVET EUROPEEN**

(45) Date de publication et mention
de la délivrance du brevet:
**21.05.2003 Bulletin 2003/21**

(51) Int Cl.⁷: **H01Q 15/08**, H01Q 15/02

(21) Numéro de dépôt: **99973357.9**

(86) Numéro de dépôt international:
**PCT/FR99/02961**

(22) Date de dépôt: **30.11.1999**

(87) Numéro de publication internationale:
**WO 00/035050 (15.06.2000 Gazette 2000/24)**

(54) **DISPOSITIF DE FOCALISATION COMPRENANT UNE LENTILLE DE TYPE DE LUNEBERG COMPRENANT UN VOLUME HOMOGENE DE MATERIAU DIELECTRIQUE ET PROCEDE DE FABRICATION D'UNE TELLE LENTILLE**

ANORDNUNG ZUR FOKUSSIERUNG MIT EINER HOMOGENEN DIELEKTIESCHEN LUNEBERG LINSE UNDVERFAHREN ZUR HERSTELLUNG

FOCUSING DEVICE COMPRISING A LUNEBERG LENS INCLUDING A HOMOGENEOUS VOLUME OF DIELECTRIC MATERIAL AND METHOD FOR MAKING SUCH A LENS

(84) Etats contractants désignés:
**AT BE CH CY DE DK ES FI FR GB GR IE IT LI LU MC NL PT SE**

(30) Priorité: **04.12.1998 FR 9815363**

(43) Date de publication de la demande:
**24.10.2001 Bulletin 2001/43**

(73) Titulaire: **THOMSON multimedia**
**92100 Boulogne Billancourt (FR)**

(72) Inventeurs:
• **Hirtzlin, Patrice**
**92648 Boulogne Cedex (FR)**
• **Louzir, Ali**
**92648 Boulogne Cedex (FR)**
• **Pagnier, Luc**
**92648 Boulogne Cedex (FR)**
• **Allaire, Christian Yves**
**92648 Boulogne Cedex (FR)**

(74) Mandataire: **Ruellan-Lemonnier, Brigitte**
**THOMSON multimedia,**
**46 quai A. Le Gallo**
**92648 Boulogne Cédex (FR)**

(56) Documents cités:
**WO-A-93/10572**            **US-A- 3 917 773**
**US-A- 5 154 973**

**Description**

L'invention est relative à un dispositif de focalisation comprenant une lentille de type de Luneberg et son procédé de fabrication. Elle concerne pllus particulièrement un dispositif de focalisation comprenant une lentille de type de Luneberg comprenant un volume homogène de matériau diélectrique.

Il est connu, dans les demandes de brevet françaises n°98 05111 et n°98 05112 déposées le 23 avril 1998 au nom de la Demanderesse, d'utiliser dans des dispositifs de réception par satellite une lentille du type de Luneberg, notamment pour la poursuite de satellites à défilement.

En théorie, la lentille doit être composée d'un nombre donné de couches de matériaux diélectriques suffisamment élevé pour s'approcher du modèle idéal de variation d'indice de réfraction caractéristique de la lentille de Luneberg. L'indice de réfraction n relatif à une couche et la constante diélectrique relative E (ou permittivité) lui correspondant sont alors reliés par la relation : $n = E^{1/2}$. Mais, l'augmentation du nombre de couches est limitée en pratique par des tolérances sévères de fabrication qui sont incompatibles avec un procédé de fabrication de grande série. Pour des lentilles de taille réduite, typiquement de diamètre inférieur à 40cm pour des transmissions en bande Ku, une solution à ce problème est d'opter pour une lentille à une seule couche de matériau diélectrique homogène.

En vue de réduire l'encombrement de la lentille, il est alors nécessaire d'augmenter sa permittivité, ce qui a pour conséquence d'augmenter la densité, ce qui a pour conséquence d'accroître désavantageusement le poids de la lentille. Un compromis est alors nécessaire entre la taille de la lentille et son poids. Ces contraintes de volume et de poids imposent pour le matériau diélectrique une gamme de densité bien définie. Par exemple, pour une lentille de diamètre de 35 cm, la densité permise est typiquement comprise entre 0,3 g/cm$^3$ à 0,8 g/cm$^3$.

Il est connu, de l'art antérieur, d'utiliser comme matériau diélectrique un mélange comprenant du polystyrène expansé chargé avec des particules à forte permittivité, des particules de céramique ou métallique par exemple, pour en augmenter la permittivité et la faire évoluer vers la gamme désirée.

Cependant, ce type de mélange ne permet pas d'assurer une homogénéité totale des particules dans le mélange, et ne garantit donc pas une densité homogène dans le volume de la lentille. De plus, le mélange obtenu est coûteux.

L'invention a pour but de remédier à ces inconvénients.

A cet effet, l'invention a pour objet un dispositif de focalisation comprenant une lentille de type de Luneberg comprenant un volume homogène de matériau diélectrique, caractérisé en ce que le matériau diélectrique comprend un agglomérat granulaire défini par une répartition granulométrique homogène de grains thermoplastiques, au moins une pluralité de ces grains étant soudés les uns aux autres par des joints de grains obtenus par fusion partielle des grains pour maintenir ledit volume consolidé.

Ainsi, les grains étant disposés les uns par rapport aux autres de telle manière que chacun d'entre eux soit en contact avec au moins un autre, l'existence de joints de grains solides permet de remplir la fonction de liant entre les différents grains et générant un ensemble compact de granulés.

Une lentille de Luneberg composée de grains thermoplastiques est connue de WO-A-93/10572. Par rapport à cet art antérieur, l'invention permet de s'affranchir de colle dont l'emploi provoque l'inconvénient de changer les caractéristiques électriques du matériau produit.

Selon un mode de réalisation, ladite pluralité de grains est comprise au moins dans une couche extérieure dudit volume homogène, ladite couche extérieure étant relative à la surface extérieure du volume prolongée à l'intérieur dudit volume d'une profondeur prédéterminée, préférentiellement de l'ordre d'un muliple d'une demi-longueur d'onde reçue et/ou transmise. De cette sorte, la couche extérieure sert à maintenir sous pression les grains de matière à l'intérieur de la couche extérieure. En plus, l'épaisseur de la couche extérieure déterminée à un muliple d'une demi-longueur d'onde reçue et/ou transmise optimise d'un point de vue radio-electrique les échanges de signaux avec l'extérieur de la lentille et permet à cette couche de jouer en même temps le rôle de radôme.

Préférentiellement, ladite pluralité de grains est uniformément répartie dans ledit volume. Ainsi, une homogénéité de densité est assurée dans tout le volume.

Avantageusement, la permittivité $\varepsilon_r$ de la lentille de matériau composé de grains thermoplastiques de permittivité $\varepsilon_{r0}$ est liée à un facteur de remplissage F désignant le rapport entre le volume effectivement occupé par les grains et le volume total dudit volumepar la relation :

$$\varepsilon_r = [(1 + 2F)\ \varepsilon_{r0} + 2\ (1 - F)]/[(1 - F)\ \varepsilon_{r0} + 2 + F].$$

Dans les demandes de brevet françaises n°98 05111 et n°98 05112, il est notamment décrit des sources primaires avoisinant la surface de focalisation de la lentille. Selon un mode de réalisation, la distance focale de la lentille est fonction de l'indice de réfraction n de la lentille et de la variation de phase acceptée sur l'ouverture du diagramme de rayonnement de la lentille, l'indice de réfraction de la lentille vérifiant :

$$n = \varepsilon_r^{1/2}.$$

Pour permettre d'augmenter le rayon de la lentille et ainsi diminuer la distance focale de celle-ci sans augmenter la variation de phase sur l'ouverture du diagramme de rayonnement de la lentille, au moins une couche supplémentaire recouvre ledit volume homogène de matériau diélectrique, celle-ci comportant également un agglomérat de grains thermoplastiques de matériau différent de celui des grains dudit volume et de densité inférieure à celui dudit volume. De cette sorte, en réalisant une gradation des indices de réfraction de l'extérieur de la lentille vers l'intérieur de celle-ci, on peut s'approcher du modèle idéal de la lentille de Luneberg.

Selon un mode de réalisation, les grains dudit volume sont composés de polystyrène. Ainsl, la densité de la lentille est dans la gamme de densité désirée.

Selon un mode de réalisation, les grains de la seconde couche sont composés de polypropylène.

De plus, les procédés de transformation de matières thermoplastiques (injection, thermoformage, rotomoulage, compression) ne permettent pas de réaliser des pièces d'une épaisseur supérieure à une quinzaine de millimètres. En outre, ces procédés engendrent des variations de densité à l'intérieur des pièces et, du fait du phénomène de retrait de matière, des déformations et des variations géométriques apparaissent dans les pièces. Ces problèmes peuvent notamment perturber le bon fonctionnement d'une lentille telle que décrite ci-dessus et mise en oeuvre selon lesdits procédés.

L'invention a pour but de résoudre ces inconvénients et, plus particulièrement, de fournir un procédé de fabrication d'une lentille de type de Luneberg comprenant un volume homogène de matériau diélectrique.

A cet effet, l'invention a pour objet un procédé de fabrication d'une lentille de type de Luneberg comprenant un volume homogène de matériau diélectrique, comprenant une étape de mise en forme dudit volume, caractérisé en ce que le volume comprend un agglomérat granulaire défini par une répartition granulométrique homogène de grains thermoplastiques et que ledit procédé comporte les étapes suivantes :

- une étape de chauffage du volume pour élever la température d'au moins une couche extérieure du volume à une température de transition comprise entre la température de ramollissement dudit matériau et la température de fusion du matériau, la couche extérieure représentant la couche extérieure du volume prolongée dans le volume d'une profondeur prédeterminée et la température de transition étant définie par un changement de phase vers une phase visqueuse d'au moins une partie de ladite couche extérieure sur ladite profondeur,
- une étape de refroidissement de ladite couche extérieure pour durcir ladite couche extérieure.

De cette sorte, cette couche extérieure durcie permet de maintenir sous pression le matériau compris à l'intérieur de la couche. Le fait de ne pas fondre totalement la matière thermoplastique permet de conserver la densité initiale de la matière thermoplastique. En outre, l'utilisation de matière thermoplastique est peu coûteuse.

Avantageusement, lors de l'étape de chauffage, on élève la température pour fondre au moins la couche extérieure des grains contenus dans ladite couche extérieure du volume en vue de la formation de joints de grains visqueux liant les grains de la couche extérieure du volume. Ainsi, les grains de la couche extérieure disposés les uns contre les autres et laissant place à des vides formant une porosité ouverte sont consolidés par la solidification, lors du refroidissement, des joints de grains visqueux enrobant lesdits grains. Le fait de ne pas fondre entièrement les grains de la couche extérieure permet de laisser suffisamment de passsage d'air entre eux pour un refroidissement rapide. Grâce à cette consolidation, la couche extérieure se transforme en une croûte maintenant sous pression les grains du volume.

Selon un mode de réalisation, l'épaisseur de la couche extérieure est de l'ordre d'un muliple d'une demi-longueur d'onde reçue et/ou transmise. Cette couche doit avoir une épaisseur supérieure à une première valeur pour pouvoir maintenir une pression suffisante sur la masse de matière qu'elle contient.

Avantageusement, l'étape de chauffage est réalisé jusquà ce que le volume entier ait atteint la température de transition, la diffusion de la chaleur dans l'intégralité du volume ayant pour fonction de dilater l'intégralité des grains. Cette dilatation des grains crée à l'intérieur du volume une pression entre les grains permettant de renforcer la soudure des grains. L'homogénéité de densité est assurée dans tout le volume.

Selon un mode de réalisation, le chauffage est réalisé par convection. Par exemple, le chauffage est réalisé par soufflage d'air chaud.

Pour remplir de telles contraintes d'épaisseur, le temps de chauffage doit être supérieur à une première valeur de température pour permette la fonte de la couche extérieure des granulés d'au moins la couche extérieure du volume et doit être inférieure à une seconde valeur de température pour permettre une homogénéité du volume comme précedémment explicité.

Selon un autre mode de réalisation, le chauffage est réalisé par rayonnement, par exemple d'ultrasons.

Selon un mode de réalisation, le procédé met en oeuvre des moyens de moulage pour mettre en forme ledit volume, lesdits moyens de moulage comprenant des porosités régulièrement disposées sur la surface extérieure desdits moyens de moulage et la vitesse relative de rotation desdits moyens de moulage par rapport à la direction de soufflage étant inférieure à une vitesse donnée pour permettre une homogénéité de température dans au moins la couche extérieure.

Selon un mode de réalisation, les moyens de moulage sont mis en vibration pour mélanger la matière. Ainsi, une meilleure homogénéité est assurée.

Selon un mode de réalisation, la température de chauffage et les durées de chauffage et de refroidissement sont ajustées en fonction de la matière thermoplastique utilisée et du volume de matière thermoplastique à obtenir.

Selon un mode de réalisation, le procédé met en oeuvre des moyens de pressage dont la pression est fonction de la densité de matière désirée dans le volume.

Selon un mode de réalisation, au moins une feuille en matière thermoplastique est thermoformée autour du volume, pour offrir une protection contre les agressions extérieures.

Selon un mode de réalisation, ledit volume est conformé de manière à permettre en fonctionnement une visibilité en élévation de 10° à 90° et en azimuth de 360°.

Selon un mode de réalisation, le volume est sphérique.

L'invention a également pour objet un dispositif de focalisation de signaux comprenant une lentille de type de Luneberg comportant un volume homogène de matériau diélectrique, caractérisé en ce que la lentille est réalisée par le procédé selon l'invention.

Selon un mode de réalisation, ledit dispositif est destiné pour la poursuite de cibles mouvantes, notamment des satellites à défilement, pour des échanges de données avec au moins un satellite géostationnaire, ou pour des transmissions points à multipoints telles que le système de distribution multipoints mutticanaux ou MMDS ("Multi-point Multi-channel Distribution System" en langue anglaise).

D'autres caractéristiques et avantages de la présente invention ressortiront de la description de l'exemple de réalisation d'un dispositif de mise en oeuvre du procédé selon un mode de réalisation de l'invention qui va suivre ainsi que l'une de ses variantes, pris à titres d'exemples non limitatifs, en référence aux figures annexées dans lesquelles :

- la figure 1 représente un dispositif de fabrication d'une lentille homogène compact mettant en oeuvre le procédé selon un mode de réalisation de l'invention et une lentille remplie de grains thermoplastiques obtenue selon ledit procédé,
- la figure 2 représente une variante de la lentille obtenue par le procédé selon l'invention,
- la figure 3 représente une lentille homogène selon un premier mode de réalisation de l'invention,
- la figure 4 représente une variante de la lentille selon l'invention.

Pour simplifier la description, les mêmes références seront utilisées pour désigner les éléments remplissant des fonctions identiques.

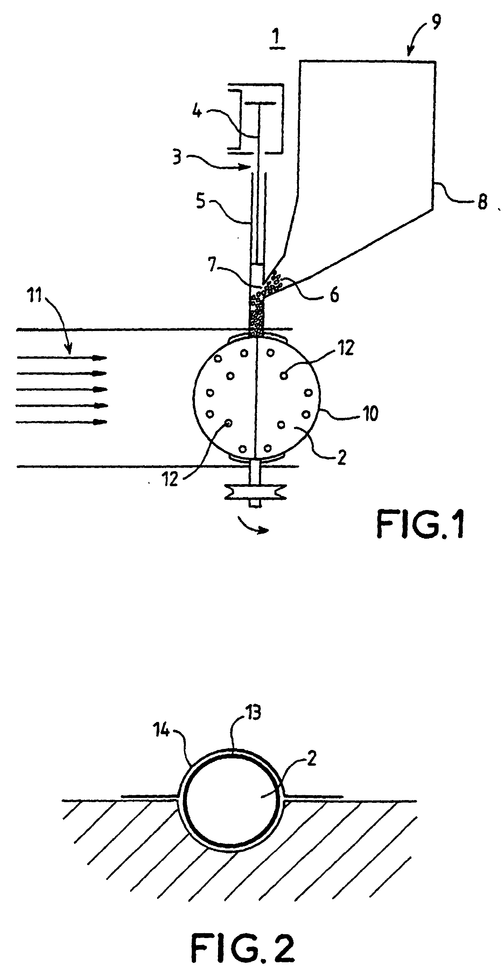

La figure 1 représente un dispositif 1 de fabrication d'une sphère 2 homogène et compact. Celui-ci comprend un vérin 3 comportant une tige 4 verticale de piston pénétrant dans le cylindre 5 vertical du vérin 3. La pression exercée sur la tige 4 du piston permet de compresser des grains 6 provenant d'une ouverture 7 pratiquée au niveau de la périphérie du cylindre 5. Ces grains 6 sont amassés dans un réservoir 8 d'une trémie 9. Un moule 10, de forme sphérique, placé en terminaison du cylindre 5 est rempli des grains 6, qui chutent par gravité à partir de l'ouverture 7 le long du cylindre 5. Le vérin pneumatique 3 assure un léger compactage des grains 6 dans le moule 10 après la fin du remplissage dans celui-ci.

De l'air chaud 11 régulé dans une plage de température réglable de 80°C à 250°C est pulsé à travers la masse des grains 6 grâce à des perforations ou pores 12 réalisés dans le moule 10 métallique constitué de deux parties séparables.

Les dimensions du moule sphérique doivent être légèrement supérieures à celles de la sphère telle que finalement produite pour tenir compte du phénomène de dilatation que vont subir les grains lors de l'apport de chaleur. La température de l'air chaud pulsé doit être suffisante pour ramollir la couche extérieure des grains et créer ainsi des joints de grains par la création de la phase visqueuse suite au ramollissement de la couche extérieure de grains de la couche extérieure 13 de la sphère 2 telle que décrite sur la figure 2. Cependant, la température choisie pour l'air chaud devra être inférieure à une température limite pour empêcher la fonte des grains de la couche extérieure, ceci afin d'éviter les problèmes de retraits et déformations liés au refroidissement d'une masse fondue de gros volume. Le fait de ne pas fondre les granulés permet de conserver leur densité initiale et de laisser suffisamment de passage d'air entre eux pour un refroidissement rapide.

Pour assurer une bonne homogénéité de température, le moule est mis en rotation en vitesse lente, de l'ordre de 10 à 50 tours par minutes de manière à éviter le phénomène de centrifugation. La dilatation thermique des grains due à l'élévation de température crée une pression à l'intérieur du moule qui assure la soudure des parties de grains en contact. Une température supérieure au point de ramollissement est nécessaire pour fondre la couche extérieure des granulés mais pendant un temps relativement court pour ne pas les fondre entièrement afin de conserver le volume et l'homogénéité de densité. La valeur de la température et le temps de soufflage sont déterminants pour le résultat final et doivent être ajustés suivant la matière thermoplastique et le volume à transformer. Ces paramètres détermineront également la valeur de retrait de la sphère finie.

Selon un mode de réalisation particulièrement intéressant, le temps de soufflage est rallongé à température égale pour faire circuler l'air chaud jusqu'au coeur de la lentille 2, l'élévation de température provoquant une dilatation des grains 6, ce qui crée une pression à l'intérieur du moule 10 permettant de réaliser la soudure.

Le refroidissement est ensuite assuré en remplaçant l'air chaud par de l'air froid circulant entre les granulés qui n'ont pas complètement fondu. Ce refroidissement provoque un léger retrait permettant le démoulage de la pièce par ouverture des deux parties du moule.

Les paramètres à ajuster sur le dispositif 1 de fabrication sont les suivants:

- la pression du vérin pneumatique qui peut monter jusqu'à 6 bars,
- la vitesse de rotation du moule de 1 à 50 tours par minute,
- la température de l'air chaud de 80°c à 250°c,
- les temps de soufflage d'air chaud et les temps de soufflage d'air froid.

Il faut noter que ce procédé est applicable principalement aux matières amorphes du fait de la progressivité de leur ramollissement . Pour les matières semi-cristallines, la fusion rapide donne une fenêtre de transformation trop étroite.

La figure 2 décrit une variante de sphère 2 obtenue par le procédé selon l'invention. Dans le cas de la lentille de type de Luneberg utilisée en extérieur, il faut que celle-ci soit protégée par une couche de protection contre les agressions extérieures telles que les intempéries.

Dans ce but, il est possible de thermoformer une feuille 14 en matière thermoplastique de même nature que les grains 6, d'une épaisseur de quelques dixièmes de millimètres à 1mm. Ce thermoformage se fait en deux opérations, chacune d'elles s'occupant d'une demi-sphère, suivi d'un détourage du plan de joint.

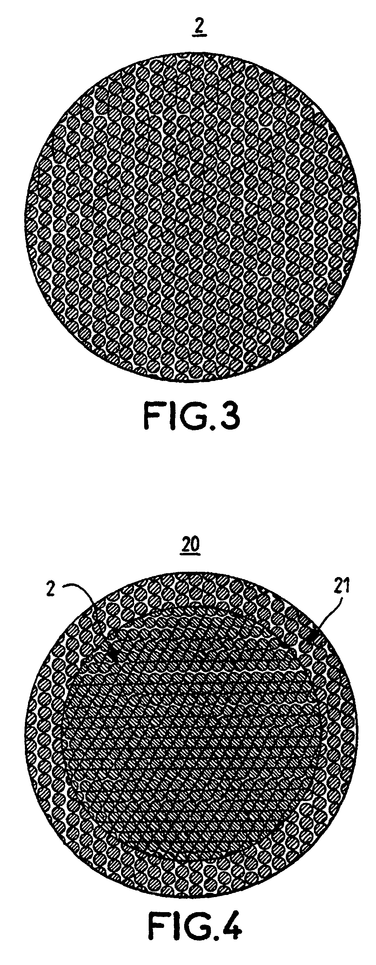

La figure 3 représente une lentille 2 homogène de 350 mm faite de grains de polystyrène (désigné dans la suite par PS, dans un souci de concision). Les caractéristiques principales du PS sont détaillées dans le tableau ci-après:

| Permittivité du PS solide ($\varepsilon_{r0}$) | 2.54 |
|---|---|
| Tangente de perte ($\tan\delta$) | $5 \cdot 10^{-4}$ |
| Densité du PS solide ($d_0$) (g/cm$^3$) | 1.05 |
| Densité des grains PS (d) (g/cm$^3$) | 0.57 |
| Facteur de remplissage du PS ($F = d / d_0$) | 0.54 |
| Permittivité des grains PS ($\varepsilon_r$) | 1.68 |

La simulation d'une lentille possédant de telles caractéristiques amène aux caractéristiques suivantes :

- une masse de 12.8 kg,
- une distance focale f telle que : f = 1.8 R (R étant le rayon de la lentille) soit une distance focale dans le présent mode de réalisation de 315mm,
- une approximation de la source primaire d'éclairement en cosinus à la puissance 8.

Les simulations tendant à déterminer la zone focale autour de la surface de focalisation ont amené à conclure que, pour qu'il n'y ait pas de dégradation de signal majeure, les sources primaires, non représentées, devraient être placées à 13 mm autour de la surface de focalisation (F = 1,8R), cette valeur étant valable pour la lentille de polystyrène et pour une variation de phase acceptée de 35° environ.

La figure 4 représente une lentille à deux couches comportant la lentille 2 de la figure 3 et une couche supplémentaire 21. La lentille 2 est faite de grains de polystyrène alors que la lentille 21 est composée de grains de polypropylène. En conservant les caractéristiques de la lentille 2 définies ci-dessus, les caractéristiques principales de la couche supplémentaire 21 de polypropylène (désigné par la suite par PP) exigées sur cette lentille 20 sont détaillées dans le tableau ci-après :

| Permittivité du PP solide ($\varepsilon_{r0}$) | 2.3 |
|---|---|

(suite)

| Tangente de perte (tan$\delta$) | $5\ 10^{-4}$ |
|---|---|
| Densité du PP solide ($d_0$) (g/cm$^3$) | 0.907 |
| Densité des grains PP (d) (g/cm$^3$) | 0.5 |
| Facteur de remplissage des grains PP (F = d / $d_0$) | 0.55 |
| Permittivité des grains PP ($\varepsilon_r$) | 1.60 |

Les simulations sur cette lentille 20 à double matériau conduisent aux caractéristiques suivantes :

- Rayon de la lentille 2 intérieure : Ri = 86 mm,
- Masse de la lentille : m = 11.4 kg,
- Distance focale : f = 1.62 R (R = rayon de la lentille), soit une distance focale de 284 mm,
- une approximation de la source primaire d'éclairement en cosinus à la puissance 6 (illumination à -12,5 dB aux bords de la lentille).

Afin de ne pas dégrader de façon trop importante les performances de la lentille, dans le présent cas notamment de la lentille à deux couches, des simulations ont mis en évidence, selon les caractéristiques définies ci-dessus, une variation permise maximum de la permittivité de chacune des couches de 0,02, soit une variation permise de 0,02 autour de la valeur déterminée de 1,68 pour les grains de polystyrène et la même variation permise autour de la valeur de 1,60 pour les grains de polypropylène. La permittivité des grains est liée au facteur de remplissage F par la relation suivante :

$$\varepsilon_r = [(1 + 2F)\ \varepsilon_{r0} + 2\ (1 - F)]/[(1 - F)\ \varepsilon_{r0} + 2 + F],$$

où $\varepsilon_{r0}$ est la permittivité de la matière plastique considérée et F le facteur de remplissage de celle-ci.
La variation correspondante du facteur de remplissage peut être calculée en utilisant la formule suivante déduite de la formule précédente :

$$\Delta F = [\varepsilon_{r0} + 2 - F\ (\varepsilon_{r0} - 1)]^2 / [3(\varepsilon_{r0} - 1)(\varepsilon_{r0} + 2)]\Delta\varepsilon_r.$$

Cette dernière formule conduit aux variations suivantes du facteur de remplissage de chacune des couches :

$$\Delta F = \pm\ 0.013 \text{ pour les grains PS } (F_{min} = 0.530 \text{ et } F_{max} = 0.557)$$

$$\Delta F = \pm\ 0.015 \text{ pour les grains PP } (F_{min} = 0.536 \text{ et } F_{max} = 0.566).$$

De même que pour la lentille 2, des simulations ont permis de déterminer une zone focale autour de la surface de focalisation de la lentille où il n'existerait pas de dégradation de signal majeure. Pour remplir cette condition, les sources primaires, non représentées, devraient être placées à ± 12 mm autour de la surface de focalisation (F=1,6R).
On notera que lors du chauffage des grains, selon l'une des variantes de l'invention, on pourra tourner le moule selon différentes directions pour une homogénéisation de la densité des grains.
Selon une autre variante de l'invention, lors de l'introduction des grains dans le moule, ces grains seront définis selon un gradient de densité pour atteindre le même objectif d'homogénéisation de densité.

**Revendications**

1. Dispositif de focalisation comprenant une lentille (2, 20) de type de Luneberg comprenant un volume homogène de matériau diélectrique, comportant un aggloméré granulaire défini par une répartition granulométrique homogène de grains (6) thermoplastiques, **caractérisé en ce qu'**au moins une pluralité de ces grains (6) sont soudés les uns aux autres par des joints de grains obtenus par fusion partielle des grains pour maintenir ledit volume consolidé.

**2.** Dispositif selon la revendication 1, **caractérisé en ce que** ladite pluralité de grains est comprise au moins dans une couche extérieure dudit volume homogène, ladite couche extérieure étant relative à la surface extérieure du volume prolongée à l'intérieur dudit volume d'une profondeur prédéterminée.

**3.** Dispositif selon la revendication 2, **caractérisé en ce que** ladite profondeur est de l'ordre d'un multiple de la demi-longueur d'onde reçue et/ou transmise.

**4.** Dispositif selon l'une des revendications 1 à 3, **caractérisé en ce que** ladite pluralité de grains est uniformément répartie dans ledit volume.

**5.** Dispositif selon l'une des revendications 1 à 4, **caractérisé en ce que** la permittivité $\varepsilon_r$ du volume de matériau composé de grains thermoplastiques de permitivité $\varepsilon_{r0}$ est liée à un facteur de remplissage F désignant le rapport entre le volume effectivement occupé par les grains et le volume total de la lentille par la relation :

$$\varepsilon_r = [(1 + 2F)\,\varepsilon_{r0} + 2(1 - F)]/[(1 - F)\,\varepsilon_{r0} + 2 + F].$$

**6.** Dispositif selon la revendication 1 à 5, **caractérisé en ce que** la distance focale de la lentille (2, 20) est fonction de l'indice de réfraction n de la lentille et de la variation de phase choisie sur l'ouverture du diagramme de rayonnemment de la lentille, l'indice de réfraction de la lentille vérifiant :

$$n = \varepsilon_r^{1/2}.$$

**7.** Dispositif selon la revendication 1 à 6, **caractérisé en ce qu'**au moins une couche supplémentaire (21) recouvre ledit volume homogène de matériau diélectrique, celle-ci comportant également un agglomérat de grains thermoplastiques de matériau différent de celui des grains dudit volume et de densité inférieure à celui dudit volume.

**8.** Dispositif selon la revendication 1 à 7, **caractérisé en ce que** les grains dudit volume sont composés de polystyrène.

**9.** Dispositif selon la revendication 7 ou la revendication 7 combinée à la revendication 8, **caractérisé en ce que** les grains de la seconde couche sont composés de polypropylène.

**10.** Procédé de fabrication d'une lentille (2) de type de Luneberg comprenant un volume (2) homogène de matériau diélectrique, comprenant une étape de mise en forme dudit volume, **caractérisé en ce que** le volume comprend un agglomérat granulaire défini par une répartition granulométrique homogène de grains (6) thermoplastiques et que ledit procédé comporte les étapes suivantes :

- une étape de chauffage du volume pour élever la température d'au moins une couche extérieure du volume à une température de transition comprise entre la température de ramollissement dudit matériau et la température de fusion du matériau, la couche extérieure représentant la couche extérieure du volume prolongée dans le volume d'une profondeur prédéterminée et la température de transition étant définie par un changement de phase vers une phase visqueuse d'au moins une partie de ladite couche extérieure sur ladite profondeur,
- une étape de refroidissement de ladite couche extérieure pour durcir ladite couche extérieure.

**11.** Procédé selon la revendication 10, **caractérisé en ce que**, lors de l'étape de chauffage, on élève la température pour fondre au moins la couche extérieure des grains contenus dans ladite couche extérieure du volume en vue de la formation de joints de grains visqueux liant les grains de la couche extérieure du volume

**12.** Procédé selon l'une des revendications 10 à 11, **caractérisé en ce que** l'épaisseur de la couche extérieure est de l'ordre d'un muliple de la demi-longueur d'onde reçue et/ou transmise.

**13.** Procédé selon l'une des revendications 10 à 12, **caractérisé en ce que** l'étape de chauffage est réalisé jusquà ce que le volume entier ait atteint la température de transition.

**14.** Procédé selon l'une des revendications 10 à 13, **caractérisé en ce que** le chauffage est réalisé par convection, soufflage d'air chaud, par rayonnement, ultrasons.

**15.** Procédé selon l'une des revendications 10 à 14, **caractérisé en ce que** le temps de chauffage doit être supérieur à une première valeur de température pour permette la fonte de la couche extérieure des granulés d'au moins la couche extérieure du volume et doit être inférieure à une seconde valeur de température pour empêcher la fonte totale de ces derniers.

**16.** Procédé selon l'une des revendications 10 à 15, **caractérisé en ce que** le procédé met en oeuvre des moyens de moulage (10) pour mettre en forme ledit volume, lesdits moyens de moulage comprenant des porosités (12) régulièrement disposées sur la surface extérieure desdits moyens de moulage et la vitesse relative de rotation desdits moyens de moulage par rapport à la direction de soufflage étant inférieure à une vitesse donnée pour permettre une homogénéité de température dans au moins la couche extérieure.

**17.** Procédé selon la revendication 16, **caractérisé en ce que** les moyens de moulage (10) sont mis en vibration pour mélanger la matière.

**18.** Procédé selon l'une des revendications 10 à 17, **caractérisé en ce que** la température de chauffage, les durées de chauffage et de refroidissement sont ajustées en fonction de la matière thermoplastique utilisée et dudit volume de matière thermoplastique.

**19.** Procédé selon l'une des revendications 10 à 18, **caractérisé en ce que** ledit procédé met en oeuvre des moyens de pressage dont la pression est fonction de la densité de matière désirée dans ledit volume.

**20.** Procédé selon la revendication 14, **caractérisé en ce que** le temps de chauffage est rallongé, à température égale, pour conduire la chaleur dans tout le volume.

**21.** Procédé selon l'une des revendications 10 à 20, **caractérisé en ce qu'**au moins une feuille en matière thermoplastique est thermoformée autour du volume.

**22.** Procédé selon l'une des revendications 10 à 21, **caractérisé en ce que** ledit volume est conformé de manière à permettre en fonctionnement une visibilité en élévation de 10° à 90° et en azimuth de 360°.

**23.** Procédé selon l'une des revendications 10 à 22, **caractérisé en ce que** le volume est sphérique.

**24.** Dispositif de focalisation de signaux comprenant une lentille de type de Luneberg comportant un volume homogène de matériau diélectrique, **caractérisé en ce que** la lentille est réalisée par le procédé selon l'une des revendications 10 à 23.

**Claims**

**1.** A focussing device comprising a Luneberg lens (2, 20) comprising a homogeneous volume of dielectric, comprising a granular agglomerate defined by a homogeneous granule size distribution of thermoplastic granules (6), **characterized in that** at least one plurality of these granules (6) being welded together by granule boundaries obtained by a partial melting of these granules in order to keep said volume consolidated.

**2.** The device as claimed in claim 1, **characterized in that** said plurality of granules is included at least within an outer layer of said homogeneous volume, said outer layer being relative to the outer surface of the volume extended toward the inside of said volume to a predetermined depth.

**3.** The device as claimed in claim 2, **characterized in that** said depth is of the order of a multiple of the received and/or transmitted half-wavelength.

**4.** The device as claimed in one of claims 1 to 3, **characterized in that** said plurality of granules is uniformly distributed within said volume.

**5.** The device as claimed in one of claims 1 to 4, **characterized in that** the permittivity $\varepsilon_r$ of the volume of material composed of thermoplastic granules with a permittivity $\varepsilon_{r0}$ is connected with a fill factor F, denoting the ratio of the volume actually occupied by the granules to the total volume of the lens, by the equation:

$$\varepsilon_r = [(1 + 2F)\ \varepsilon_{r0} + 2(1 - F)]/[(1-F)\ \varepsilon_{r0} + 2 + F].$$

6. The device as claimed in claims 1 to 5, **characterized in that** the focal length of the lens (2, 20) depends on the refractive index n of the lens and on the accepted phase variation over the aperture of the radiation pattern of the lens, the refractive index of the lens being given by:

$$n = \varepsilon_r^{\frac{1}{2}}.$$

7. The device as claimed in claims 1 to 6, **characterized in that** at least one additional layer (21) covers said homogeneous volume of dielectric, said additional layer also comprising an agglomerate of thermoplastic granules of a material differing from that of the granules of said volume and having a density less than that of said volume.

8. The device as claimed in claims 1 to 7, **characterized in that** the granules of said volume are composed of polystyrene.

9. The device as claimed in claim 7 or claim 7 combined with claim 8, **characterized in that** the granules of the second layer are composed of polypropylene.

10. A process for manufacturing a Luneberg lens (2) comprising a homogeneous volume (2) of dielectric, comprising a step of forming said volume, **characterized in that** the volume comprises a granular agglomerate defined by a homogeneous size distribution of thermoplastic granules (6) and **in that** said process comprises the following steps:

    - a step of heating the volume in order to raise the temperature of at least one outer layer of the volume to a transition temperature between the softening temperature of said material and the melting point of the material, the outer layer representing the outer layer of the volume extended into the volume to a predetermined depth and the transition temperature being defined by a phase change toward a viscous phase of at least part of said outer layer over said depth;
    - a step of cooling said outer layer in order to harden said outer layer.

11. The process as claimed in claim 10, **characterized in that**, during the heating step, the temperature is raised in order to melt at least the outer layer of the granules contained in said outer layer of the volume for the purpose of forming viscous granule boundaries binding the granules of the outer layer of the volume.

12. The process as claimed in either of claims 10 and 11, **characterized in that** the thickness of the outer layer is of the order of a multiple of the received and/or transmitted half-wavelength.

13. The process as claimed in one of claims 10 to 12, **characterized in that** the heating step is carried out until the entire volume has reached the transition temperature.

14. The process as claimed in one of claims 10 to 13, **characterized in that** the heating is carried out by convection, hot air blowing radiation, ultrasonic heating.

15. The process as claimed in one of claims 10 to 14, **characterized in that** the heating time must be greater than a first temperature value in order to allow the outer layer of the granules of at least the outer layer of the volume to melt and must be less than a second temperature value in order to prevent these granules from completely melting.

16. The process as claimed in one of claims 10 to 15, **characterized in that** the process employs molding means (10) for forming said volume, said molding means comprising porosities (12) uniformly arranged over the outer surface of said molding means and the relative rotational speed of said molding means with respect to the blowing direction being less than a given speed in order to allow temperature homogeneity within at least the outer layer.

17. The process as claimed in claim 16, **characterized in that** the molding means (10) are vibrated in order to mix the material.

18. The process as claimed in one of claims 10 to 17, **characterized in that** the heating temperature and the heating and cooling times are adjusted according to the thermoplastic used and to said volume of thermoplastic.

19. The process as claimed in one of claims 10 to 18, **characterized in that** said process employs pressing means, the pressure of which depends on the desired material density in said volume.

20. The process as claimed in claim 14, **characterized in that** the heating time is extended, at a constant temperature, in order to conduct heat into the entire volume.

21. The process as claimed in one of claims 10 to 20, **characterized in that** at least one sheet of thermoplastic is thermoformed around the volume.

22. The process as claimed in one of claims 10 to 21, **characterized in that** said volume is shaped so as to allow, in operation, a visibility in elevation of 10° to 90° and in azimuth of 360°.

23. The process as claimed in one of claims 10 to 22, **characterized in that** the volume is spherical.

24. A signal focussing device comprising a Luneberg lens having a homogeneous volume of dielectric, **characterized in that** the lens is produced by the process according to one of claims 10 to 23.


**Patentansprüche**

1. Fokussiereinheit mit einer Lüneburglinse (2, 20) mit einem homogenen Volumen aus Dielektrikum mit einem granularen Agglomerat, gebildet durch eine homogene granulare Verteilung aus thermoplastischen Körnern (6), **dadurch gekennzeichnet, dass**
das wenigstens eine Mehrzahl dieser Körner (6) durch Körnerverbindungen miteinander verschweißt ist, die durch teilweise Fusion der Körner gewonnen werden, um das Volumen verfestigt zu halten.

2. Einheit nach Anspruch 1, **dadurch gekennzeichnet, dass** die mehreren Körner wenigstens in einer äußeren Schicht des homogenen Volumens enthalten sind, und dass die äußere Schicht relativ zu der Außenfläche des Volumens zum Inneren des Volumens um eine vorbestimmte Tiefe ausgedehnt ist.

3. Einheit nach Anspruch 2, **dadurch gekennzeichnet, dass** die Tiefe in der Größenordnung eines Mehrfachen der empfangenen und/oder gesendeten halben Wellenlänge liegt.

4. Einheit nach einem der Ansprüche 1 bis 3, **dadurch gekennzeichnet, dass** die mehreren Körner gleichmäßig in dem Volumen verteilt sind.

5. Einheit nach einem der Ansprüche 1 bis 4, **dadurch gekennzeichnet, dass** die Permittivität $\varepsilon_r$ des Volumens aus Material, das aus thermoplastischen Körner mit der Permittivität $\varepsilon_{r0}$ besteht, mit einem Füllfaktor F verknüpft ist, der das Verhältnis des tatsächlich durch die Körner ausgefüllten Volumens und dem Gesamtvolumen der Linse bezeichnet, durch folgende Gleichung verknüpft ist:

$$\varepsilon r = [(1+2F)\ \varepsilon_{r0} + 2(1-F)]/[(1 - F)\ \varepsilon_{r0} + 2 + F].$$

6. Einheit nach Anspruch 1 bis 5, **dadurch gekennzeichnet, dass** die Brennweite der Linse (2, 20) abhängig ist von dem Brechungsindex n der Linse und der gewählten Phasenänderung über der Öffnung des Strahlungsmusters der Linse und dem Brechungsindex der Linse gegeben ist durch:

$$N = \varepsilon_r{}^{1/2}.$$

7. Einheit nach Anspruch 1 bis 6, **dadurch gekennzeichnet, dass** wenigstens eine zusätzliche Schicht (21) das homogene Volumen des dielektrischen Materials bedeckt, dass die zusätzliche Schicht außerdem ein Agglomerat von thermoplastischen Kömer aus einem anderen Material als die Körner des Volumens enthält und eine Dichte aufweist, die kleiner ist als die des Volumens.

8. Einheit nach Anspruch 1 bis 7, **dadurch gekennzeichnet, dass** die Körner des Volumens aus Polystyren zusammengesetzt sind.

9. Einheit nach Anspruch 7 oder der Kombination von Anspruch 7 mit Anspruch 8, **dadurch gekennzeichnet, dass** die Körner der zweiten Schicht aus Polypropylen zusammengesetzt sind.

10. Verfahren zur Herstellung einer Lüneburglinse (2) mit einem homogenen Volumen (2) aus einem Dielektrikum mit einem Schritt zur Bildung des Volumens, **dadurch gekennzeichnet, dass** das Volumen ein granulares Agglomerat enthält, das durch eine homogene Größenverteilung der thermoplastischen Körner (6) gebildet ist, und das Verfahren die folgenden Schritte enthält:

    - ein Schritt zur Erwärmung des Volumens, um wenigstens eine äußere Schicht des Volumens auf eine Übergangstemperatur zwischen der Schmelztemperatur des Materials und dem Schmelzpunkt des Materials anzuheben, wobei die äußere Schicht die äußere Schicht des Volumens darstellt, das auf eine vorbestimmte Tiefe in das Volumen ausgedehnt ist, und dass die Übergangstemperatur durch eine Phasenänderung zu der viskosen Phase wenigstens eines Teils der äußeren Schicht über die Tiefe ermittelt wird,
    - ein Schritt zur Abkühlung der äußeren Schicht, um diese äußere Schicht auszuhärten.

11. Verfahren nach Anspruch 10, **dadurch gekennzeichnet, dass** während des Erwärmungsschritts die Temperatur erhöht wird, um wenigstens die äußere Schicht der in dieser äußeren Schicht enthaltenen Körner des Volumens zum Zweck der Bildung von viskosen Körnerverbindungen durchzuführen, die die Körner der äußeren Schicht des Volumens miteinander verbinden.

12. Verfahren nach einem der Ansprüche 10 bis 11, **dadurch gekennzeichnet, dass** die Dicke der äußeren Schicht in der Größenordnung eines Vielfachen der empfangenen und/oder gesendeten halben Wellenlänge liegt.

13. Verfahren nach einem der Ansprüche 10 bis 12, **dadurch gekennzeichnet, dass** der Schritt der Erwärmung durchgeführt wird, bis das Gesamtvolumen die Umwandlungstemperatur erreicht hat.

14. Verfahren nach einem der Ansprüche 10 bis 13, **dadurch gekennzeichnet, dass** die Erwärmung durch eine Konvektion, eine heiße Luftströmung, Strahlung oder Ultraschall erfolgt.

15. Verfahren nach einem der Ansprüche 10 bis 14, **dadurch gekennzeichnet, dass** die Erwärmungszeit größer sein muß als ein erster Temperaturwert, um das Schmelzen der äußeren Schicht der Körner wenigstens der äußeren Schicht des Volumens zu ermöglichen, und kleiner sein muß als ein zweiter Temperaturwert, um das vollständige Schmelzen dieser Körner zu verhindern.

16. Verfahren nach einem der Ansprüche 10 bis 15, **dadurch gekennzeichnet, dass** das Verfahren Gießmittel (10) einsetzt für das Formen des Volumens, das die Gießmittel Porositäten (12) aufweisen, die gleichmäßig über die Außenfläche der Gießmittel verteilt sind, und die relative Drehgeschwindigkeit der Gießmittel gegenüber der Blasrichtung kleiner ist als eine bestimmte Geschwindigkeit, um eine Homogenität der Temperatur wenigstens der äußeren Schicht zu ermöglichen.

17. Verfahren nach Anspruch 16, **dadurch gekennzeichnet, dass** die Gießmittel (10) in Vibration versetzt werden, um das Material zu mischen.

18. Verfahren nach einem der Ansprüche 10 bis 17, **dadurch gekennzeichnet, dass** die Erwärmungstemperatur, die Erwärmungszeit und die Abkühlzeit in Abhängigkeit von dem angewendeten thermoplastischen Material und dem Volumen des thermoplastischen Materials eingestellt sind.

19. Verfahren nach einem der Ansprüche 10 bis 18, **dadurch gekennzeichnet, dass** das Verfahren Druckmittel einsetzt, deren Druck abhängig ist von der gewünschten Materialdichte in dem Volumen.

20. Verfahren nach Anspruch 14, **dadurch gekennzeichnet, dass** die Erwärmzeit auf eine konstante Temperatur ausgedehnt wird, um Wärme in das Gesamtvolumen zu führen.

21. Verfahren nach einem der Ansprüche 10 bis 20, **dadurch gekennzeichnet, dass** wenigstens eine Schicht aus einem thermoplastischen Material um das Volumen warmverformt aufgebracht ist.

22. Verfahren nach einem der Ansprüche 10 bis 21, **dadurch gekennzeichnet, dass** das Volumen derart geformt ist, dass im Betrieb eine Sichtbarkeit in der Elevation von 10° bis 90° und in einem Azimuth von 360° ermöglicht wird.

23. Verfahren nach einem der Ansprüche 10 bis 22, **dadurch gekennzeichnet, dass** das Volumen kugelförmig ist.

24. Signalfokussiereinheit mit einer Lüneburglinse mit einem homogenen Volumen eines dielektrischen Materials, **dadurch gekennzeichnet, dass** die Linse nach einem der Ansprüche 10 bis 23 hergestellt ist.

FIG.1

FIG.2

13

<u>2</u>

FIG.3

<u>20</u>

FIG.4